# EUROPÄISCHE PATENTSCHRIFT

(11) **EP 1 245 804 B1**
(45) Veröffentlichungstag und Bekanntmachung des Hinweises auf die Patenterteilung: **24.05.2006**
(21) Anmeldenummer: 01107386.3
(22) Anmeldetag: 26.03.2001
(51) Int. Cl.: F02C 6/00, F02C 7/18

(54) **Gasturbine**
Gas turbine
Turbine à gaz

(43) Veröffentlichungstag der Anmeldung: 02.10.2002
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 0 595 026
- EP-A- 1 028 237
- DE-A- 19 501 471
- FR-A- 1 063 380
- GB-A- 513 151
- GB-A- 2 236 145
- US-A- 3 315 467

## Beschreibung

Die Erfindung betrifft eine Gasturbine, welche eine Brennkammer, ein Kühlsystem zur Luftkühlung mindestens der Leitschaufeln und Führungsringe verschiedener Stufen der Gasturbine und einen Hauptgaskanal umfasst, wobei eine weitere Brennkammer in Heißgashauptrichtung hinter der Hauptbrennkammer angeordnet ist, in welche die zur Kühlung einer vor der weiteren Brennkammer angeordneten Stufe der Gasturbine verwendete Kühlluft eingespeist ist.

Aus der EP 1 028 237 A2 ist eine Gasturbine mit einer zweistufigen Brennkammer-Konfiguration bekannt. Die Gasturbine weist einen Verdichter, eine erste Brennkammer und eine erste Turbinenstufe sowie strömungstechnisch nachgeschaltet eine zweite Brennkammer und eine zweite Turbinenstufe auf, wobei die Rotoren der Verdichter und Turbinen auf einer gemeinsamen Welle sitzen. In der ersten Brennkammer wird ein fettes Brennstoff-Luft-Gemisch zu einem Heißgas verbrannt, welches sich in der ersten Turbine arbeitsleistend entspannt und dabei den Verdichter antreibt. Das aus der ersten Turbine abströmende Heißgas wird erneut mit Verdichterluft vermischt und in der zweiten Brennkammer als dünneres Gemisch nachverbrannt unter Bildung eines zweiten Heißgasstromes, der die zweite Turbine durchströmt. Zur Kühlung der beiden Turbinen wird ebenfalls dem Verdichter ein Kühlluftstrom entnommen, der, aufgeteilt in zwei Teilkühlluftströme, jeweils die heißgasbeaufschlagten Komponenten der einzelnen Turbinen kühlt. Die durch die Kühlung der ersten Turbinenstufe aufgeheizte Kühlluft wird dabei mit der Verdichterluft vermischt, welche der zweiten Brennkammer und dem Abgas der ersten Turbinenstitfe zugeführt wird.

In der US-PS 5,083,422 ist eine Gasturbine für ein Flugzeugtriebwerk beschrieben. Diese Gasturbine weist eine Brennkammer auf, welcher durch einen Kompressor verdichtete Kühlluft zugeführt wird, die zum größten Teil von den in der Brennkammer angeordneten Brennern für die Verbrennung verbraucht wird. Ein anderer Teil dieser Kühlluft wird zur Kühlung der den Innenraum der Brennkammer abgewandten Seite der Innenwand der Brennkammer verwendet. In den Bereichen, in denen in der Brennkammer Brenner angeordnet sind, ist die Innenwand der Brennkammer von einem Mantel umgeben, welcher Löcher zum Einströmen von Kühlluft aufweist. Die Innenwand selbst ist in diesen Bereichen luftundurchlässig ausgeführt.

Dieser andere Teil der Kühlluft tritt durch die Löcher des genannten Mantels der Innenwand und kühlt auf diese Weise die dem Innenraum der Brennkammer abgewandte Seite der Innenwand. Die Innenwand weist weiterhin eine Öffnung auf, durch welche die durch die Löcher in dem Mantel eingetretene Kühlluft dem Innenraum zugeführt wird, so dass sich diese mit dem in dem Innenraum strömender Heißgas vermischen kann. So ist sichergestellt, dass die Luft, welche zur Kühlung der Brennkammerwand verwendet wird, anschließend für die Verbrennung genutzt werden kann. Eine insgesamt sowohl für die Kühlung der Brennkammerwand als auch für die Verbrennung zur Verfügung stehende Menge an Luft wird damit im Hinblick auf die erzeugbare Leistung der Gasturbine besser ausgenutzt, da die Kühlluft nicht für die Verbrennung "verloren" ist. Zusätzlich zur Brennkammerwand müssen bei einer Gasturbine in der Regel noch mindes - tens die Leitschaufeln und die Führungsringe während des Betriebs gekühlt werden. Üblicherweise wird dazu ebenfalls Kühlluft verwendet, welche die genannten Komponenten durchströmt und/oder überstreicht. Eine Zuführung dieser Kühlluft zur Verbrennung wird in der genannten Schrift nicht gelehrt.

Diese Kühlluft ist nicht ohne weiteres für eine Verbrennung nutzbar, da sie auf ihrem Kühlweg zu viel an Druck verliert, als dass sie zurück zur Brennkammer geführt werden könnte, um dort die Verbrennung zu fördern.

Der genannte Stand der Technik zeigt keine Lösungsmöglichkeiten auf, wie die zur Kühlung mindestens der Leitschaufeln der Führungsringe verwendete Kühlluft ebenfalls für die Verbrennung nutzbar gemacht werden könnte.

Der Erfindung liegt daher die Aufgabe zugrunde, die insgesamt zur Verfügung stehende Luftmenge bei einer mehrstufigen Gasturbine besser auszunutzen. Weiterhin ist es eine Aufgabe der Erfindung, die Leistung der Gasturbine mit einfachen Mitteln zu verbessern. Ferner ist es eine Aufgabe der Erfindung, die Schadstoffemissionen der Gasturbine zu verringern.

Die genannten Aufgaben werden durch eine Gasturbine, welche eine Hauptbrennkammer, ein Kühlsystem zur Luftkühlung mindestens der Leitschaufeln und/oder Führungsringe verschiedener Stufen der Gasturbine und einem Hauptgaskanal umfasst, bei welcher eine weitere Brennkammer in Heißgashauptrichtung hinter der Hauptbrennkammer angeordnet ist, in welche die zur Kühlung einer vor der weiteren Brennkammer angeordneten Stufe der Gasturbine verwendete Kühlluft gespeist ist, gelöst, indem die weitere Brennkammer ein geschlossenes Kühlsystem aufweist, in welches die zur Kühlung einer davor angeordneten Stufe der Gasturbine verwendete Kühlluft gespeist ist.

Gasturbinen, insbesondere Gasturbinen zur Erzeugung von elektrischer Energie, enthalten meist mehrere, durch Leit- und Laufschaufeln gebildete Stufen, um die im Heißgas enthaltene Energie schrittweise zu entziehen, um diese möglichst gut in Rotationsenergie umzuwandeln und diese dann, im Falle des Einsatzes in der Energieerzeugung, durch einen der Turbine nachgeschalteten Generator in elektrische Energie umzuwandeln.

Bei Durchtritt des Heißgases durch eine Stufe der Gasturbine gibt das Heißgas nur einen Teil seiner Energie an die Laufschaufeln dieser Stufe ab, so dass nach Durchtritt des Heißgases durch diese Stufe immer noch Energie zur Verfügung steht, welche in Rotationsenergie umgewandelt werden kann. Daher werden bei bekannten Gasturbinen mehrere Stufen hintereinander geschaltet, um die Energie des Heißgases möglichst gut auszunutzen. Eine Gasturbine kann z.B. drei Stufen enthalten, beispielsweise eine Hochdruckstufe, eine Mitteldruckstufe und eine Niederdruckstufe. Die Leit- und Laufschaufeln und die Führungsringe jeder Stufe sind dabei in ihrer Konstruktion und Auslegung den in der jeweiligen Stufe herrschenden Druckverhältnissen angepasst. Um eine thermische Überbeanspruchung dieser Komponenten zu vermeiden, werden mindestens die Leitschaufeln und/oder Führungsringe jeder Stufe mit Hilfe von Kühlluft gekühlt. Damit diese Kühlluft für die Verbrennung nicht verloren ist, ist erfindungsgemäß vorgesehen, dass diese Kühlluft in einer weiteren Brennkammer, welche in Heißgasrichtung hinter der Hauptbrennkammer angeordnet ist, zur Verbrennung genutzt ist.

Das in dieser weiteren Brennkammer erzeugte Heißgas wird anschließend einer nächsten Stufe der Gasturbine zugeführt.

Auf diese Weise wird nach der Erfindung die zur Kühlung einer Stufe der Gasturbine benutzte Kühlluft für die Verbrennung in einer weiteren Brennkammer verwendet, so dass möglichst viel der insgesamt eingespeisten Luft für die Verbrennung genutzt wird.

Dadurch ist eine Leistungssteigerung einer mehrstufigen Turbine realisiert, da die zur Kühlung einer Turbinenstufe verwendete Kühlluft in einer weiteren Brennkammer zur Verbrennung genutzt wird und somit zusätzliche Energie zum Antrieb einer nächsten Turbinenstufe zur Verfügung steht, ohne das Luftversorgungssystem der Turbine größer dimensionieren zu müssen.

Weiterhin ist es bei der vorliegenden Erfindung möglich, den bisher bereits benötigten Brennstoff jetzt auf die beiden Brennkammern aufzuteilen. Man braucht also zur Erreichung einer Leistungssteigerung die Brennstoffzufuhr nicht zu erhöhen. Würde man dies tun, so erhöhten sich die temperaturabhängigen Schadstoffemissionen, z.B. Stickoxide. So ist durch die Erfindung eine Leistungssteigerung erreicht, ohne erhöhte Schadstoffemissionen in Kauf nehmen zu müssen.

Desweiteren werden die Schaufeln der Turbine thermisch trotz der erzielten Leistungssteigerung nicht stärker belastet, da zur Leistungssteigerung keine vermehrte Brennstoffzufuhr erfolgt, welche zu einem Anstieg der Arbeitstemperatur und damit der thermischen Belastung der Stufen der Gasturbine führen würde.

Ein derartiges Kühlsystem der weiteren Brennkammer kann beispielsweise dadurch gebildet sein, dass die Innenwand der weiteren Brennkammer von einer Außenwand umgeben ist, so dass zwischen der Innen- und Außenwand der weiteren Brennkammer ein Zwischenraum gebildet ist, welcher als Kühlluftkanal im geschlossenen Kühlluftsystem dient.

Kühlluft, welche Komponenten, beispielsweise eine Leitschaufel und/oder einen Führungsring einer vor der weiteren Brennkammer angeordneten Stufe der Gasturbine durchströmt bzw. überstrichen hat, wird anschließend in den geschlossenen Kühlluftkanal der weiteren Brennkammer gespeist. Dabei kühlt diese Kühlluft die Außenseite der Brennkammerinnenwand der weiteren Brennkammer, indem sie an deren Außenseite entlang streicht.

Durch mindestens eine Öffnung in der Innenwand gelangt die Kühlluft aus dem geschlossenen Kühlluftsystem in den Brennraum der weiteren Brennkammer, wo sie sich mit einem von einem Verdichter erzeugten und der weiteren Brennkammer zugeführten Luftstrom vermischt und der Verbrennung zugeführt wird.

Das geschlossene Kühlsystem der weiteren Brennkammer bietet den Vorteil, dass bei der Kühlung der Außenseite der Innenwand besagter weiterer Brennkammer keine Luft verloren geht, welche dann nicht mehr für die Verbrennung in der weiteren Brennkammer benutzt werden könnte. Auf diese Weise ist der Wirkungsgrad der weiteren Brennkammer verbessert.

In vorteilhafter Ausgestaltung der Erfindung mündet die weitere Brennkammer in Heißgashauptrichtung hinter einer davor angeordneten und vor einer danach angeordneten Stufe der Gasturbine in den Hauptgaskanal.

Das Heißgas, welches durch eine vor der weiteren Brennkammer angeordnete Stufe der Gasturbine hindurchgeströmt ist, vermischt sich vor dem Durchströmen einer nach der weiteren Brennkammer angeordneten Stufe der Gasturbine mit dem in der weiteren Brennkammer erzeugten Heißgas. Diese Mischströmung ist beispielsweise hinsichtlich der in ihr herrschenden Temperatur- und Druckverteilung praktisch homogen, so dass die Leit- und Laufschaufeln sowie die Führungsringe der nachgeordneten Stufe gleichmäßig belastet sind.

In einer weiteren vorteilhaften Ausgestaltung der Erfindung ist in das geschlossene Kühlsystem zusätzlich die Kühlluft gespeist, welche zur Kühlung einer in Heißgashauptrichtung nach der weiteren Brennkammer angeordneten Stufe der Gasturbine benutzt wird.

Die wichtigen Komponenten jeder Stufe einer Gasturbine, wie z.B. die Leitschaufeln und die Führungsringe, müssen im Betrieb vor einer thermischen Überbeanspruchung geschützt und daher gekühlt werden. Um auch diejenige Kühlluft für eine Verbrennung in der weiteren Brennkammer zu verwenden, die für die Kühlung einer nach der weiteren Brennkammer angeordneten Stufe der Gasturbine eingesetzt wird, wird diese Kühlluft ebenfalls in das geschlossene Kühlsystem der weiteren Brennkammer gespeist und anschließend für die Verbrennung in der weiteren Brennkammer benutzt.

Auf diese Weise erhöht sich der Wirkungsgrad der weiteren Brennkammer.

Vorteilhaft ist die nach der weiteren Brennkammer angeordnete Stufe der Gasturbine mittels einer Überströmleitung, welche mit der vor der weiteren Brennkammer angeordneten Stufe kommuniziert, mit Kühlluft versorgt.

So ist sichergestellt, dass die Kühlluft, welche zur Kühlung der beiden genannten Stufen verwendet wird, in den Bereichen beider Stufen praktisch die gleichen Druckverhältnisse aufweist. Auf diese Weise fördern jeweiligen Anteile der Kühlluft, welche jeweils zur Kühlung einer der genannten Stufen verwendet wurden, praktisch mit gleichem Anteil die Verbrennung in der weiteren Brennkammer.

Bei einem nicht nur unwesentlichen Druckunterschied zwischen den beiden genannten Kühlluftströmungen würde eine der beiden Strömungen die andere unter Umständen zurückdrängen, so dass letztere nicht oder nur zum Teil für die Verbrennung in der weiteren Brennkammer genutzt werden kann. Die vorliegende Weiterbildung der Erfindung trägt somit zu einer weiteren Erhöhung des Wirkungsgrads der Verbrennung bei.

Vorteilhaft ist die weitere Brennkammer zwischen zwei Abschottwänden angeordnet, welche die weitere Brennkammer von angrenzenden Bereichen der Turbine trennt, in denen durch Verdichter erzeugter Gasdruck herrscht.

Durch die unterschiedlichen Druckverhältnisse, welche in den Bereichen der vor bzw. nach der weiteren Brennkammer angeordneten Stufen der Gasturbine im Vergleich zum Bereich der weiteren Brennkammer herrschen, strömt die Kühlluft bevorzugt aus Bereichen, in denen die vorher genannten Stufen der Turbine angeordnet sind, in den Bereich, in dem die weitere Brennkammer angeordnet ist; die Abschottwände gewährleisten dabei, dass sich der Druck zwischen den genannten Bereichen nicht ausgleicht und somit ein Druckgefälle bestehen bleibt.

Im Folgenden ist ein Ausführungsbeispiel der Erfindung beschrieben.

Es zeigt:
- FIG: eine Brennkammeranordnung einer erfindungsgemäßen Gasturbine.

Die Gasturbine 5 umfasst eine Hauptbrennkammer 10, deren Brennkammerinnenraum durch eine Brennkammerinnenraumwand 11a eingeschlossen wird. Nach außen wird die Hauptbrennkammer 10 durch eine Brennkammeraußenwand 11b derart begrenzt, dass zwischen der Brennkammerinnenwand 11a und der Brennkammeraußenwand 11b ein Kühlluftkanal 20 gebildet ist.

Beim Betrieb der Gasturbine 5 wird ein von einem Verdichter erzeugtes Verdichter-Gasgemisch 12 in die Hauptbrennkammer 10 eingeführt, wo dieses durch nicht näher dargestellte, in der Hauptbrennkammer 10 angeordnete Brenner, zu einem Heißgasgemisch verbrannt wird, welches daraufhin nacheinander die Laufschaufeln 30 und 32 der Turbinenstufen 25 bzw. 27 antreibt.

In den Kühlluftkanal 20 der Hauptbrennkammer 10 wird Kühlluft 15 eingespeist, welche die Brennkammerinnenwand 11a an deren der Hauptbrennkammer 10 abgewandten Seite kühlt. Die Kühlluft 15 wird durch Öffnungen 16 in den Innenraum der Hauptbrennkammer 10 eingespeist, wo sie die Verbrennung als Sauerstoff-Lieferant fördert. Die Kühlluft 15 wird außerdem mittels eines Diffusors 17 durch die Leitschaufel 26 der Turbinenstufe 25 geleitet und kühlt somit die Leitschaufel 26. Nach dem Austritt aus der Leitschaufel 26 wird die Kühlluft 15 an einem Führungsring 28 zu dessen Kühlung vorbeigeführt.

Nach der Hauptbrennkammer 10 ist in Heißgashauptrichtung H eine weitere Brennkammer 34 angeordnet.

Die Kühlluft 15 wird in einen Kühlluftkanal 35 der weiteren Brennkammer 34 eingeleitet.

Ein Verdichter-Gasgemisch 14 wird der weiteren Brennkammer 34 zugeführt, um dort durch nicht dargestellte Brenner verbrannt zu werden zu einem Neben-Heißgasstrom, welcher dann in Richtung N aus der weiteren Brennkammer 34 austritt.

Die Kühlluft 15 im Kühlluftkanal 35 der weiteren Brennkammer 34 wird durch Öffnungen 37 in den Innenraum der weiteren Brennkammer 34 eingeleitet und fördert dort als Sauerstoff-Lieferant die Verbrennung.

Über eine Überströmleitung 40 wird die Kühlluft 15 zu einer weiteren Turbinenstufe 27 geleitet. Sie wird dort entlang eines Führungsrings 38 geführt, kühlt diesen dadurch und tritt anschließend in eine Leitschaufel 29 ein. Danach tritt die Kühlluft 15 an der selben Seite der Leitschaufel 29 aus, an der sie eingeleitet wurde.

Die aus der Leitschaufel 29 austretende Kühlluft 15 wird in den Kühlluftkanal 35 der weiteren Brennkammer 35 eingespeist. Durch die Öffnungen 37 gelangen Anteile der Kühlluft 15, welche von der Leitschaufel 29 herkommend in den Kühlluftkanal 35 eingespeist wurden, in den Innenraum der weiteren Brennkammer 34 und fördern dort die Verbrennung.

Zusätzlich zur beschriebenen Kühlluftführung durch die Leitschaufeln kann, wie im aktuellen Ausführungsbeispiel gezeigt, die Kühlluft 15 auch in die Laufschaufeln 30,32 eingeleitet sein und diese kühlen. Die Kühlluft 15 wird in diesem Fall am freien Ende der Laufschaufeln 30,32 reflektiert und tritt auf der gleichen Seite der jeweiligen Laufschaufel aus, an der sie eingetreten ist. Am Ort ihres Austritts wird sie dann mittels eines Kanals der Leitschaufel 29 zugeführt, tritt durch diese hindurch und ist anschließend in den Kühlluftkanal der weiteren Brennkammer 34 eingespeist. Von dort aus kann sie dann durch die Austrittsöffnung 37 in den Brennraum der weiteren Brennkammer eintreten.

Die weitere Brennkammer 34 mündet mit ihrem Neben-Heißgaskanal 45 hinter der Stufe 25 in den Haupt-Heißgaskanal 40. Dort vermischt sich der in Richtung N fließende, von der weiteren Brennkammer 34 erzeugte Neben-Heißgasstrom mit dem in Richtung H fließenden Haupt-Heißgasstrom, welcher von der Brennkammer 10 erzeugt ist.

Diese Mischströmung tritt durch die Leitschaufel 29 der Turbinenstufe 27 und treibt die Laufschaufel 32 der Turbinenstufe 27 an.

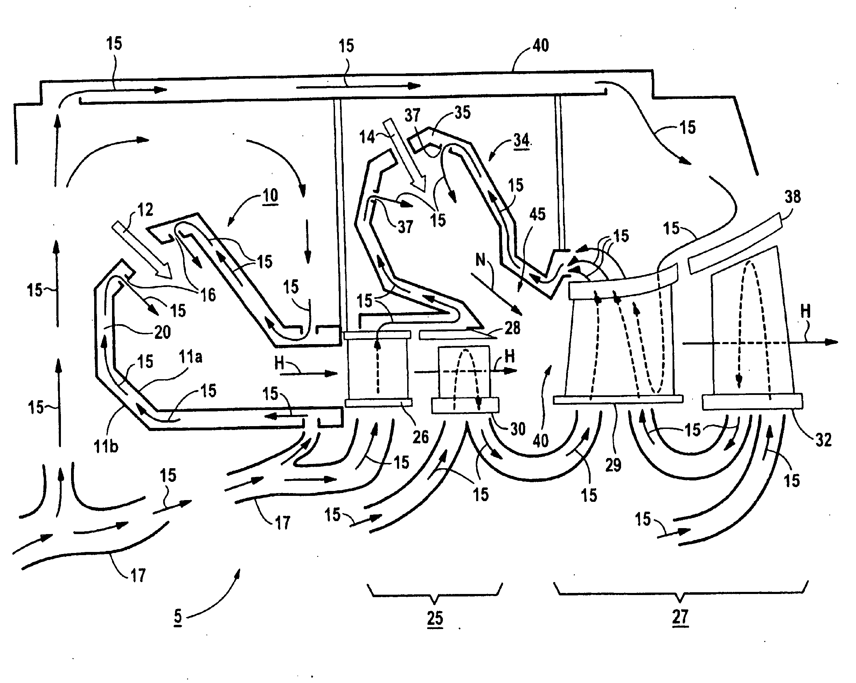

Bei dem in der Figur dargestellten Ausführungsbeispiel der Erfindung wird praktisch die gesamte Kühlluft 15, welche zur Kühlung der Turbinenstufen 25 und 27 verwendet wird, nach dem Kühlvorgang einer Verbrennung zugeführt. Dadurch ist insbesondere eine Leistungssteigerung der Gasturbine erreicht, ohne die Brennstoffzufuhr erhöhen zu müssen. Desweiteren sind damit die thermischen Belastungen der Schaufeln, sowie der Ausstoß an Schadstoffen, insbesondere der Ausstoß an Stickoxiden, der Gasturbine trotz der erfolgten Leistungssteigerung nicht erhöht. In vielen Fällen ist durch eine erfindungsgemäße Gasturbine sogar eine Reduzierung der thermischen Belastung der Schaufeln sowie der ausgestoßenen Schadstoffe realisierbar.

## Patentansprüche

1. Gasturbine (5) mit einer Hauptbrennkammer (10), einem Kühlsystem zur Luftkühlung mindestens der Leitschaufeln (26, 29) und Führungsringe (28, 38) verschiedener Stufen (25, 27) der Gasturbine (5) und/oder einem Hauptgaskanal,
wobei eine weitere Brennkammer (34) in Heißgashauptrichtung (H) hinter der Hauptbrennkammer (10) angeordnet ist, in welche die zur Kühlung einer vor der weiteren Brennkammer (34) angeordneten Stufe (25) der Gasturbine (5) verwendete Kühlluft (15) eingespeist ist,
**dadurch gekennzeichnet, dass** die weitere Brennkammer (34) ein geschlossenes Kühlsystem (35) aufweist, in welche die zur Kühlung einer davor angeordneten Stufe (25) der Gasturbine (5) verwendete Kühlluft (15) gespeist ist.

2. Gasturbine nach Anspruch 1,
**dadurch gekennzeichnet, dass** die weitere Brennkammer (34) in Heißgasrichtung (H) hinter einer davor angeordneten Stufe (25) und vor einer danach angeordneten Stufe (27) in den Hauptgaskanal mündet.

3. Gasturbine nach Anspruch 1 oder 2,
**dadurch gekennzeichnet, dass** in das geschlossene Kühlsystem (35) zusätzlich die zur Kühlung einer in Heißgashauptrichtung (H) nach der weiteren Brennkammer angeordneten Stufe (27) der Gasturbine (5) benutzte Kühlluft (15) gespeist ist.

4. Gasturbine nach Anspruch 3,
**dadurch gekennzeichnet, dass** die nach der weiteren Brennkammer (34) angeordneten Stufe (27) mittels einer Überströmleitung (40), welche mit der vor der weiteren Brennkammer (34) angeordneten Stufe (25) kommuniziert, mit Kühlluft (15) versorgt ist.

5. Gasturbine nach einem der Ansprüche 1 bis 3,
**dadurch gekennzeichnet, dass** die weitere Brennkammer (34) zwischen Abschottwänden angeordnet ist, welche die weitere Brennkammer (34) von angrenzenden Bereichen der Turbine trennt, in denen durch Verdichter erzeugter Gasdruck herrscht.

## Claims

1. Gas turbine (5) having a main combustion chamber (10), a cooling system for the air cooling of at least the guide vanes (26, 29) and guide rings (28, 38) of various stages (25, 27) of the gas turbine (5) and/or a main gas passage, a further combustion chamber (34) being arranged downstream of the main combustion chamber (10), as seen in the hot-gas main direction (H), into which the cooling air (15) used to cool a stage (25) of the gas turbine (5) which is arranged upstream of the further combustion chamber (34) is fed, **characterized in that** the further combustion chamber (34) has a closed cooling system (35), into which the cooling air (15) used to cool a stage (25) of the gas turbine (5) which is arranged upstream of it is fed.

2. Gas turbine according to Claim 1, **characterized in that** the further combustion chamber (34), as seen in the hot-gas direction (H), opens out into the main gas passage downstream of a stage (25) arranged upstream of it and upstream of a stage (27) arranged downstream of it.

3. Gas turbine according to Claim 1 or 2, **characterized in that** the cooling air (15) which is used to cool a stage (27) of the gas turbine (5) which is arranged downstream of the further combustion chamber, as seen in the hot-gas main direction (H), is additionally fed into the closed cooling system (35).

4. Gas turbine according to Claim 3, **characterized in that** the stage (27) which is arranged downstream of the further combustion chamber (34) is supplied with cooling air (15) by means of an overflow line (40) which is in communication with the stage (25) arranged upstream of the further combustion chamber (34).

5. Gas turbine according to one of Claims 1 to 3, **characterized in that** the further combustion chamber (34) is arranged between partition walls which separate the further combustion chamber (34) from adjoining regions of the turbine in which gas pressure which has been generated by compressors prevails.

## Revendications

1. Turbine (5) à gaz comprenant une chambre (10) de combustion principale, un système de refroidissement par de l'air d'au moins les aubes (26, 29) directrices et des anneaux (28, 38) de guidage de divers étages (25, 27) de la turbine (5) à gaz et/ou un canal principal pour du gaz, une autre chambre (34) de combustion étant disposée en aval dans le sens (H) principal du gaz chaud de la chambre (10) de combustion principale, chambre dans laquelle est envoyé l'air (15) de refroidissement utilisé pour le refroidissement d'un étage (25) de la turbine (5) à gaz disposé en amont de l'autre chambre (34) de combustion,
**caractérisée en ce que** l'autre chambre (34) de combustion comporte un système (35) de refroidissement fermé, dans lequel est envoyé l'air (15) de refroidissement utilisé pour le refroidissement d'un étage (25) de la turbine (5) à gaz disposé en amont.

2. Turbine à gaz suivant la revendication 1,
**caractérisée en ce que** l'autre chambre (34) de combustion débouche dans le canal principal pour le gaz, dans le sens (H) du gaz chaud, en aval d'un étage (25) disposé en amont et en amont d'un étage (27) disposé en aval.

3. Turbine à gaz suivant la revendication 1 ou 2,
**caractérisée en ce que** dans le système (35) de refroidissement fermé, est envoyé en plus l'air (15) de refroidissement utilisé pour le refroidissement d'un étage (27) de la turbine (5) à gaz disposé, dans le sens (H) principal du gaz chaud, en aval de l'autre chambre de combustion.

4. Turbine à gaz suivant la revendication 3,
**caractérisée en ce que** l'étage (27) disposé en aval de l'autre chambre (34) de combustion est alimenté en air (15) de refroidissement au moyen d'un conduit (40) de débordement, qui communique avec l'étage (25) disposé en amont de l'autre chambre (34) de combustion.

5. Turbine à gaz suivant l'une des revendications 1 à 3,
**caractérisée en ce que** l'autre chambre (34) de combustion est disposée entre deux cloisons qui séparent l'autre chambre (34) de combustion de parties voisines de la turbine, dans lesquelles règne une pression de gaz produite par compresseur.
